# EUROPEAN PATENT APPLICATION

(11) **EP 4 086 520 A1**
(43) Date of publication of application: **09.11.2022**
(21) Application number: 20909896.1
(22) Date of filing: 29.12.2020
(51) Int. Cl.: F24C 7/02, F24C 7/08

(54) **MICROWAVE COOKING APPARATUS AND CONTROL DEVICE THEREFOR**

(30) Priority: 31.12.2019 CN 201911418598
(71) Applicant: Guangdong Midea Kitchen Appliances Manufacturing Co., Ltd., Foshan, Guangdong 528311 (CN)
(72) Inventor: CHEN, Zonglong, Foshan, Guangdong 528311 (CN)
(74) Representative: Whitlock, Holly Elizabeth Ann
(86) International application number: PCT/CN2020/140869
(87) International publication number: WO 2021/136272

(57) **Abstract**

A microwave cooking apparatus and a control device therefor. The microwave cooking apparatus comprises a cavity (200), and a microwave heating element (201) is provided in the cavity (200). The control device (100) comprises: a power divider (101), a control circuit (102), a microwave source (103), and a power supply (104), wherein an input port (Pin) of the power divider (101) is connected to the microwave source (103) and an output port (Pout) is connected to the microwave heating element (201), or an input port (Pin) of the power divider (101) is connected to the microwave heating element (201) and an output port (Pout) is connected to the microwave source (103), and the power divider (101) is used for power distribution or power synthesis of microwaves output by the microwave source (103); the control circuit (102) is configured to control the microwave source (103) to output microwaves according to a given power, and transmit the microwaves output by the microwave source (103) to the microwave heating element (201) by means of the power divider (101) to heat food in the cavity (200). By means of the power divider (101), the control device (100) can realize power distribution and power synthesis so as to heat food, thereby increasing the cooking speed and improving the cooking experience of a user.

## Description

### CROSS-REFERENCE TO RELATED APPLICATION

The present application is submitted based on and claims priority to Chinese Patent Application 201911418598.5, filed on December 31, 2019, which is incorporated herein by reference in its entirety.

### TECHNICAL FIELD

The present disclosure relates to the field of microwave technologies, and more particularly, to a microwave cooking apparatus and a control device for the microwave cooking apparatus.

### BACKGROUND

A microwave is an electromagnetic wave, and a microwave oven is a modern microwave cooking apparatus that heats a food with the microwave. The microwave oven is composed of a power supply, a magnetron, a control circuit and cavity. The power supply supplies a high voltage of about 4000 volts to the magnetron, and the magnetron continuously generates the microwave by an excitation of the power supply. The microwave is coupled into the cavity to heat the food in the cavity.

It can be seen that the existing microwave oven emits the microwave by the magnetron to perform a microwave heating, and can only perform the heating, which may result in a slow microwave cooking speed and affect a cooking experience of a user. Furthermore, how to accurately control the magnetron to emit the microwave of a desired power is very important for heating the food in the microwave oven. However, there is no existing microwave oven which accurately detects the microwave emitted from the magnetron, thus it is difficult to implement precise and effective heating control for different foods.

### SUMMARY

The present disclosure is intended to address, at least in part to solve one of the technical problems in the related art.

Therefore, an object of the present disclosure is to provide a control device for a microwave cooking apparatus, which can realize power dividing and power combining by a power divider to heat a food, thereby accelerating a cooking speed and improving a cooking experience of a user.

Another object of the present disclosure is to provide a microwave cooking apparatus.

In order to achieve the above objects, embodiments of a first aspect of the present disclosure provide a control device for a microwave cooking apparatus. The microwave cooking apparatus includes a cavity in which a microwave heating element is disposed. The control device includes a power divider, a control circuit, a microwave source and a power supply. The power divider is configured to perform power dividing or power combining on a microwave output from the microwave source. Further, the power divider is connected to the microwave source at an input port thereof and to the microwave heating element at an output port thereof, or the power divider is connected to the microwave heating element at the input port thereof and to the microwave source at the output port thereof. The control circuit is configured to control the microwave source to output a microwave based on a predetermined power, and the microwave output from the microwave source is transmitted to the microwave heating element through the power divider to heat a food in the cavity. The power supply is configured to supply power to the control circuit and the microwave source.

According to the control device for the microwave cooking apparatus of the embodiment of the present disclosure, the control circuit can control the microwave source to output the microwave based on the predetermined power, and after the power dividing is performed on the microwave, the microwave is transmitted to the microwave heating element to heat the food in the cavity. The power divider is also capable of performing the power combining on the microwave output from the microwave source. Therefore, the control device can realize both the power dividing and the power combining by the power divider to heat the food, thereby accelerating the cooking speed and improving the cooking experience of the user.

In addition, the control device for the microwave cooking apparatus according to the above-mentioned embodiments of the present disclosure may also have the following additional technical features.

According to an embodiment of the present disclosure, the power divider has M output ports, and M-1 microwave heating elements are provided, where M is an integer greater than 1. The control device also includes a detection circuit. The detection circuit has an input end connected to one of the M output ports and an output end connected to the control circuit. Further, the remaining M-1 output ports of the M output ports are connected to the M-1 microwave heating elements in one-to-one correspondence. The control circuit is further configured to calculate an output power of the microwave source based on a power signal detected by the detection circuit, and to adjust the predetermined power based on the output power of the microwave source.

According to an embodiment of the present disclosure, the microwave source is a solid-state microwave source, a magnetron, or a signal generator. When the microwave source is the signal generator, the control device also includes an amplification circuit connected between the microwave source and the power divider or between the power divider and the microwave heating elements. The amplification circuit is configured to amplify a power input to the amplification circuit. The power supply is further configured to supply power to the amplification circuit.

According to an embodiment of the present disclosure, when a plurality of amplification circuits is provided and connected between the power divider and the microwave heating element, the control circuit is also connected to each of the plurality of amplification circuits to control an operation state of each of the plurality of amplification circuits to heat a predetermined region in the cavity or perform a uniform heating.

According to an embodiment of the present disclosure, when the power divider is connected to the microwave source at the input port thereof and to the microwave heating element at the output port thereof, one microwave source and one microwave heating element are provided, or one microwave source and a plurality of microwave heating elements are provided. When the power divider is connected to the microwave heating element at the input port thereof and to the microwave source at the output port thereof, a plurality of the microwave sources and one microwave heating element are provided.

According to an embodiment of the present disclosure, the microwave cooking apparatus also includes a wireless charging assembly, a microwave imaging assembly and a lighting assembly. The power divider has N output ports of an equal-dividing type or an unequal-dividing type, where N is an integer greater than 3. Three of the N output ports are connected to the wireless charging assembly, the microwave imaging assembly, and the lighting assembly in one-to-one correspondence to realize wireless charging function, imaging of the food, and illumination, respectively. The control circuit is also connected to the microwave imaging assembly to adjust the output power of the microwave source based on an imaging condition of the food.

According to an embodiment of the present disclosure, the control circuit, the signal generator, the power divider and the amplification circuit are integrated together.

According to an embodiment of the present disclosure, when the control device comprises the detection circuit, the detection circuit, the control circuit, the signal generator, the power divider and the amplification circuit are integrated together.

According to an embodiment of the present disclosure, the microwave heating element is an antenna, a waveguide or a cable.

In order to achieve the above-mentioned objects, embodiments of a second aspect of the present disclosure provide a microwave cooking apparatus including the control device for the microwave cooking apparatus as described in the above embodiments of the present disclosure.

The microwave cooking apparatus of the embodiments of the present disclosure employs the control device for the microwave cooking apparatus of the embodiments of the present disclosure. The microwave cooking apparatus can realize both the power dividing and the power combining by the power divider to heat the food, thereby accelerating the cooking speed and improving the cooking experience of the user.

Additional aspects and advantages of the present disclosure will be set forth in part in the following description, and in part will be apparent from the following description, or learned by practice of the present disclosure.

### BRIEF DESCRIPTION OF DRAWINGS

The above and/or additional aspects and advantages of the present disclosure will be apparent and easily understandable from the following description of embodiments in conjunction with the accompanying drawings, in which:
FIG. 1 is a structural block diagram of a control device for a microwave cooking apparatus according to an embodiment of the present disclosure.
FIG. 2 is a structural block diagram of a control device for a microwave cooking apparatus according to an embodiment of the present disclosure.
FIG. 3 is a structural block diagram of a control device for a microwave cooking apparatus according to an example of the present disclosure.
FIG. 4 is a structural block diagram of a control device for a microwave cooking apparatus according to another example of the present disclosure.
FIG. 5 is a structural block diagram of a control device for a microwave cooking apparatus according to another embodiment of the present disclosure.
FIG. 6 is a structural block diagram of a microwave cooking apparatus according to an embodiment of the present disclosure.

### DESCRIPTION OF EMBODIMENTS

The embodiments of the present disclosure are described below in detail. Examples of the embodiments are illustrated in the accompanying drawings, wherein the same or similar reference signs refer to the same or similar elements or elements having the same or similar functions throughout the drawings. The embodiments described below with reference to the accompanying drawings are exemplary, and are intended to explain the present disclosure, rather than being construed as a limitation thereto.

A microwave cooking apparatus and a control device for the microwave cooking apparatus according to embodiments of the present invention will be described below with reference to the accompanying drawings.

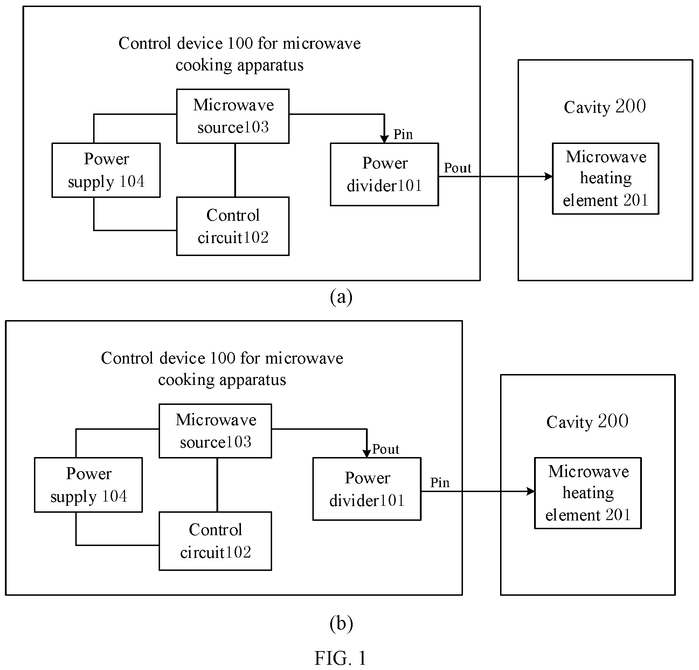

FIG. 1 is a structural block diagram of a control device for a microwave cooking apparatus according to an embodiment of the present disclosure.

As shown in FIG. 1, the microwave cooking apparatus includes a cavity 200 in which a microwave heating element 201 is disposed. A control device 100 includes a power divider 101, a control circuit 102, a microwave source 103 and a power supply 104.

As shown in FIG. 1(a), the power divider 101 is connected to the microwave source 103 at an input port Pin thereof and to the microwave heating element 201 at an output port Pout thereof. In some embodiments, as shown in FIG. 1(b), the power divider 101 is connected to the microwave heating element 201 at the input port Pin thereof and to the microwave source 103 at the output port Pout thereof. The power divider 101 is configured to perform power dividing or power combining on a microwave output from the microwave source 103. The control circuit 102 is configured to control the microwave source103 to output the microwave based on a predetermined power. The microwave outputted from the microwave source103 is transmitted to the microwave heating element 201 through the power divider 101 to heat a food in the cavity 200. The power supply 104 is configured to supply power to the control circuit102 and the microwave source 103.

Specifically, referring to FIG. 1(a), in practical application, in a case where the power divider 101 is connected to the microwave source 103 at the input port Pin thereof and to the microwave heating element 201 the output port Pout thereof, after the microwave cooking apparatus is activated, the control circuit 102 and the microwave source 103 are powered by the power supply 104, and then the control circuit 102 controls the microwave source 103 to output the microwave based on the predetermined power. A power of the microwave may be in the order of one hundred watts to kilowatts. After the power dividing is performed on the microwave output from the microwave source 103 by the power divider101, the microwave is transmitted to the microwave heating element 201 to be fed into the cavity 200 of the microwave cooking apparatus for cooking the food in the cavity 200.

The microwave heating element 201 may be an antenna, a waveguide or a cable. Specifically, the power divider101 is capable of outputting multichannel microwaves, which may be fed into the cavity 200 through different antennas, waveguides or cables.

Referring to FIG. 1(b), in a case where the power divider101 is connected to the microwave heating element 201 at the input port Pin thereof and to the microwave source 103 at the output port Pout thereof, that is, the microwave output from the microwave source 103 is transmitted to the power divider 101 through the output port Pout of the power divider 101 and then is output from the input port Pin of the power divider 101 to be transmitted to the microwave heating element 201. In the practical application, the control circuit 102 controls the microwave source 103 to output the microwave based on the predetermined power, and the microwave is transmitted to the power divider 101. The power divider 101 performs power combining on the microwave output from the microwave source 103 or transmits the microwave to the microwave heating element 201 to feed the microwaves into the cavity 200 of the microwave cooking apparatus for cooking the food in the cavity 200, thereby increasing a total power capacity of the microwave cooking apparatus and accelerating a cooking speed.

In this embodiment, a rotatable stirrer is arranged near an entrance of the cavity 200. The stirrer is a fan-shaped metal and is capable of reflecting the microwave in all directions during its rotation to uniformly distribute a microwave energy throughout the cavity 200 to heat the food.

It should be understood that the control circuit 102 in this embodiment is capable of controlling both the microwave source 103 and the microwave cooking apparatus. The microwave cooking apparatus in this embodiment may be a microwave oven with a power in a range of generally 500 watts to 1000 watts.

Therefore, the control device for the microwave cooking apparatus in the embodiment of the present disclosure can realize both the power dividing and the power combining by the power divider to heat the food, thereby accelerating the cooking speed and improving a cooking experience of a user.

It should be noted that the specific implementation in which the power divider 101 performs the power dividing will be described below by various embodiments and examples. For the specific implementation in which the power divider 101 performs the power combining may refer to the specific implementation in which the power divider 101 performs the power dividing.

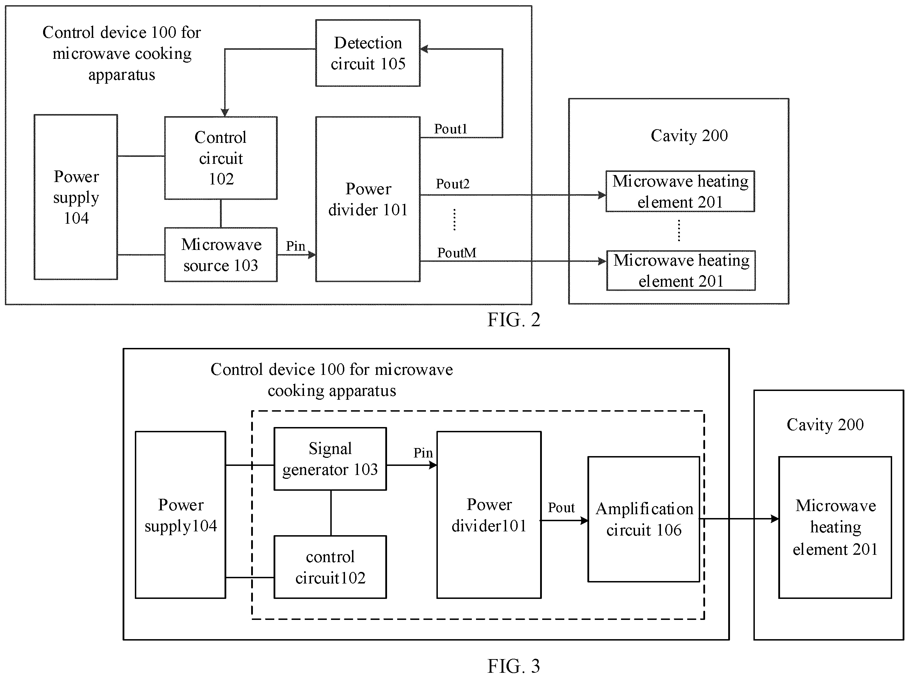

In an embodiment of the present disclosure, as shown in FIG. 2, the power divider 101 may have M output ports Pout1, Pout2, ..., PoutM, and M-1 microwave heating elements 201 may be provided, where M is an integer greater than 1. The control device 100 may also include a detection circuit 105. The detection circuit 105 has an input end connected to one (such as the Pout1) of the M output ports Pout1, Pout2, ..., PoutM and an output port connected to the control circuit 102. The remaining M-1 (such as the Pout2 to the PoutM) output ports of the M output ports are connected to the M-1 microwave heating elements in one-to-one correspondence. The control circuit 102 is further configured to calculate an output power of the microwave source 103 based on a power signal detected by the detection circuit 105 and to adjust the predetermined power based on the output power of the microwave source 103.

Specifically, referring to FIG. 2, in the case where the power divider 101 is connected to the microwave source 103 at the input port Pin thereof and to the microwave heating element 201 at the output ports Pout2 to Pout M thereof, and the output port Pout1 is connected to the detection circuit 105, the control circuit 102 controls the microwave source 103 to output the microwave with a power of one hundred watts to kilowatt based on the predetermined power. The microwave is divided by the power divider 101 to allocate a microwave with a low power to the detection circuit 105 through the output port Pout1. The detection circuit 105 is capable of converting a low-power signal into a voltage signal or a digital signal to be transmitted to the control circuit102. Thus, the control circuit 102 can calculate a total output power of the microwave source 103 based on the voltage signal or the digital signal and a dividing ratio of the power divider 101, thereby realizing a quantitative detection of the output power of the microwave cooking apparatus. Also, the control circuit 102 can accurately control the output power of the microwave cooking apparatus based on the total output power.

The microwave may be fed into the cavity through the output ports Pout2 to PoutM of the power divider 101 by M-1 microwave heating elements 201 such as the antennas, the waveguides or the cables for cooking the food in the cavity 200. It should be noted that the M-1 output ports of the power divider101 connected to the microwave heating element 201 may be of a proportional-dividing type, an equal-dividing type or an unequal-dividing type, which may be in various forms such as a lumped parameter, a microstrip line, a coaxial, a waveguide, etc.. By optimizing a combination of the M-1 microwave heating elements 201, a predetermined region in the cavity can be heated, and a uniform heating uniformity can be improved in combination with the corresponding control of the control circuit 102.

It should be understood that connecting one output of the power divider 101 to the detection circuit 105 for the power detection has an equivalent effect to a coupling effect by a directional coupler. Thus, the directional coupler may be regarded as an unequal-dividing or a proportional-dividing type power divider.

Therefore, through accurately detecting the output power of the microwave cooking apparatus by the detection circuit, it is possible to implement an accurate and effective control according to different foods in the cavity to meet efficient and specific heating requirements.

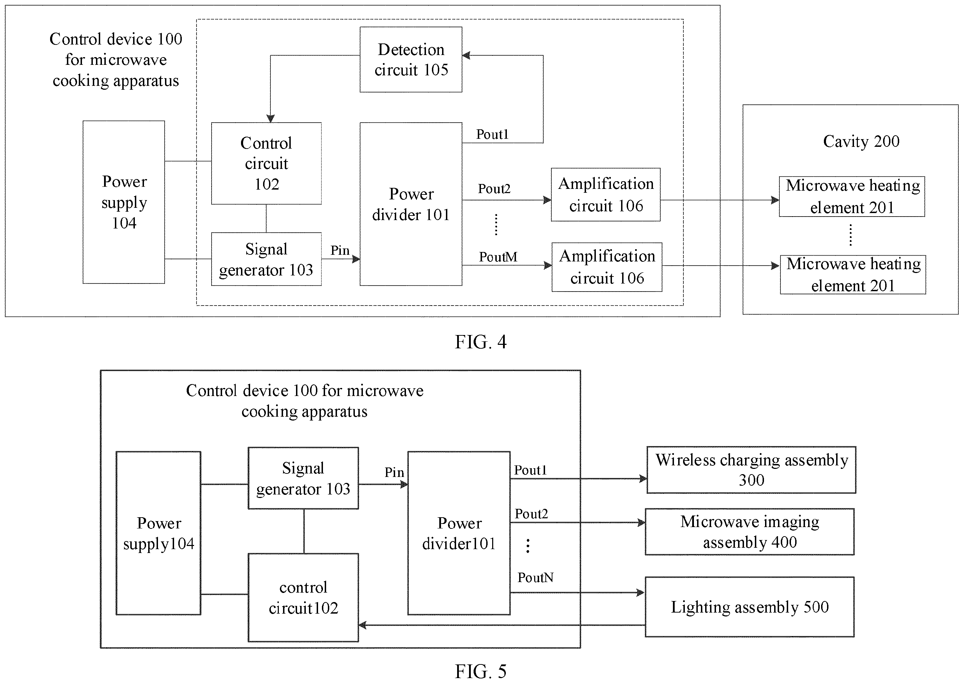

In an embodiment of the present disclosure, the microwave source 103 may be a solid-state microwave source, a magnetron, or a signal generator. As shown in FIG. 3 and FIG. 4 , in the case where the microwave source 103 is the signal generator, the control device 100 may also include an amplification circuit 106 connected between the microwave source 103 (the signal generator) and the power divider 101 or between the power divider 101 and the microwave heating element 201. The amplification circuit 106 is configured to amplify a power input to the amplification circuit106. Further, the power supply 104 is further configured to supply power to the amplification circuit 106 (not shown). FIG. 3 is a structural block diagram of the control device 100 obtained by combining this embodiment on the basis of FIG. 1.

It should be noted that, in this embodiment, in the case where the microwave source 103 is the solid-state microwave source or the magnetron, the microwave source 103 and the power divider 101 are two independent devices. The microwave is output to the input port Pin of the power divider 101 from the microwave source 103, and then is output to a plurality of microwave heating elements 201 through a plurality of output ports after divided by the power divider 101. By optimizing a combination of a plurality of microwave heating elements, a variety of cooking effects can be achieved.

Further, referring to FIG. 4 , in a case where the amplification circuit 106 is connected between the power divider 101 and the microwave heating element 201 and a plurality of amplification circuits 106 are provided, the control circuit is also connected to each of the plurality of amplification circuits 106 (not shown) to control an operation state of each of the plurality of amplification circuits 106 to heat the predetermined region in the cavity or perform a uniform heating. FIG. 4 is a structural block diagram of a control device 100 obtained by combining this example on the basis of FIG. 2.

Specifically, in the practical application, after the microwave cooking apparatus is activated, the power supply 104 supplies power to the control circuit 102, the signal generator 103 and the amplification circuit 106, and then the control circuit 102 controls the signal generator 103 to output the low-power signal based on the predetermined power. The low-power signal is transmitted to the power divider 101. The power divider 101 divides the low-power signal into M output signals. That is, the low-power signal is output through the M output ports Pout1 to PoutM. One of the M output signals is output to the detection circuit 105 through the output port Pout1 to allow the detection circuit 105 to detect the power signal, and then the control circuit 102 calculates the output power of the microwave source 103 based on the power signal, thereby realizing the quantitative detection of the output power of the microwave cooking apparatus. Further, the remaining M-1 output signals are output to the respective amplification circuits 106 to allow the amplification circuits 106 to amplify the power of the signals to a level between 100 watts and 100 kilowatts. Each output of the plurality of amplification circuits 106 is output to the respective microwave heating element 201 (which may be the antennas, the waveguides or the cables) to feed the amplified microwave into the cavity 200 of the microwave cooking apparatus by the antennas, the waveguides or the cables for cooking the food in the cavity 200. The control circuit 102 can control an operation state of each amplification circuit 106 to heat the predetermined region in the cavity 200 or perform a uniform heating.

In this example, when a plurality of amplification circuits 106 and a plurality of microwave heating elements 201 are provided, the layout may be set according to a position of the microwave cooking apparatus to increase flexibility and practicability of the setting.

It should be understood that each output of the amplification circuits 106 in FIG. 4 may be a low-power output, and a structural dimension of each output may be correspondingly reduced, thereby reducing cost of the amplification circuits 106. Therefore, each output signal can be controlled based on the control of each amplification circuit by the control circuit 6, which results in an excellent cooking effect.

In an embodiment of the present disclosure, referring to FIG. 1(a) and FIG. 3, in the case where the power divider 101 is connected to the microwave source 103 at the input port thereof and to the microwave heating element 201 at the output port thereof, one microwave source 103 and one microwave heating element 201 are provided. In some embodiments, referring to FIG. 2 and FIG. 4, one microwave source 103 and a plurality of microwave heating elements 201 are provided. Referring to FIG. 1(b), in the case where the power divider 101 is connected to the microwave heating element 201 at the input port thereof and to the microwave source 103 at the output port thereof, a plurality of microwave sources 103 and one microwave heating element 201 are provided.

Specifically, in the actual cooking, in the case where one microwave source 103 (i.e., a single source) and one microwave heating element 201 (e.g., the antenna) are provided, that is, a form of one source and one antenna is formed, in this case, the power divider 101 performs the power dividing. In the case where one microwave source 103 and a plurality of microwave heating elements 201 (e.g., the antennas) are provided, a form of one source and multi-antennas is formed. It should be understood that, in the case where a plurality of microwave sources 103 is provided, that is, a form of multi-sources and multi-antennas is formed, in this case, the power divider 101 also performs the power dividing. In the case where a plurality of the microwave sources 103 (i.e. multi-source) and one microwave heating element 201 (such as the antenna) are provided, a form of multi-sources and one antenna is formed. The multichannel microwaves are combined into one high power by the power divider 101, thereby realizing power combining. Therefore, a better cooking experience can be achieved by a combination of the microwave sources and the microwave heating elements in different numbers.

In an embodiment of the present disclosure, as shown in FIG. 5, the microwave cooking apparatus may also include a wireless charging assembly 300, a microwave imaging assembly 400 and a lighting assembly 500. The power divider has N output ports Pout1, Pout2, ... PoutN of an equal-dividing type or an unequal-dividing type, where N is an integer greater than 3. Three of the N output ports (any three, for example, Pout1, Pout2, PoutN) are connected to the wireless charging assembly 300, the microwave imaging assembly 400, and the lighting assembly 500 in one-to-one correspondence to realize wireless charging function, imaging of the food in the cavity 200, and illumination, respectively. The control circuit 102 is also connected to the microwave imaging assembly 400 to adjust the output power of the microwave source 103 based on an imaging condition of the food.

Specifically, referring to FIG. 5, in the practical application, in a case where the output port Pout1 of the power divider 101 is connected to the charging assembly 300, the other components, accessories or other devices in the microwave cooking apparatus can be wirelessly charged with the microwave output from this output port. Thus, it is possible to ensure an operation time of the microwave cooking apparatus and prevent interruption of the operation of the microwave cooking apparatus due to insufficient power. In addition, in a case where the output port Pout2 of the power divider 101 is connected to the lighting assembly 500, the other components, accessories or other devices in the microwave cooking apparatus can be illuminated by the microwave output from this output port. Thus, the user can view the microwave cooking apparatus more clearly. In a case where the output port PoutN of the power divider 101 is connected to the microwave imaging assembly 400, the food in the cavity 200 of the microwave cooking apparatus can be imaged by the microwave output through this output port, and a food imaging result can be transmitted to the control circuit 102. The control circuit 102 can adjust the output power of the microwave source 103 based on the imaging condition of the food, and then adjust the predetermined power based on the output power to ensure better cooking effect.

Therefore, by connecting the plurality of output ports of the power divider to different functional assemblies to realize different functions, it is advantageous for a functional expansion of the microwave cooking apparatus, so that the microwave cooking apparatus has more functions.

It should be understood that, in this embodiment, the N output ports Pout1, Pout2, ..., PoutN of the power divider 101 may be of a proportional-dividing type, an equal-dividing type, or an unequal-dividing type, which may be in various forms such as a lumped parameter, a microstrip line, a coaxial, a waveguide, etc., and the specific form may be selected as desired, which is not limited herein.

In an example of the present disclosure, referring to FIG. 3, the control circuit 102, the signal generator 103, the power dividers 101, and the amplification circuit106 are integrated together (as shown by the dashed box in FIG. 3).

Specifically, on the basis of FIG. 1, in the case where the amplification circuit 106 is connected between the power divider 101 and the microwave heating element 201, the control circuit 102, the signal generator 103, the power dividers 101 and amplification circuit106 are integrated together. Thus, a space occupied by the control device 100 can be reduced, and the cost of the control device 100 can be easily reduced.

In another example of the present disclosure, referring to FIG. 4, when the control device 100 includes the detection circuit 105, the detection circuit 105, the control circuit 102, the signal generator 103 , the power divider 101 and the amplification circuit 106 are integrated together (as shown by the dotted box in FIG. 4).

Specifically, referring to FIG. 2, when the control device 100 includes the detection circuit 105, one output port (e.g. Pout1) of the power divider 101 is connected to the detection circuit 105, and the remaining M-1 output ports are connected to the microwave heating element 201. Therefore, referring to FIG. 4, when the amplification circuits 106 are connected between the power divider 101 and the microwave heating elements 201, the amplification circuits 106 may have the same number as the microwave heating elements 201. The integrated arrangement of the detection circuit 105, the control circuit 102, the signal generator 103, the power divider 101 and the amplification circuit 106 can reduce the space occupied by the control device 100 and also easily reduce the cost of the control device 100.

It should be understood that the control circuit 102 can control the control device 100 for the microwave cooking apparatus 100 and the microwave cooking apparatus, and can also be connected to other control panels of the microwave cooking apparatus, to realize good control and better cooking effect.

In view of the above, the control device for the microwave cooking apparatus of the embodiment of the present disclosure can realize both the power dividing and the power combining by the power divider to heat the food, thereby accelerating the cooking speed and improving the cooking experience of the user. By accurately detecting the output power of the microwave cooking apparatus by the detection circuit, it is possible to implement the accurate and effective control of different foods in the cavity to meet the highly efficient and specific heating requirements, such that accurate and effective heating control can be implemented for different foods. The combinations of the microwave sources and the microwave heating elements of different numbers can improve the cooking experience of the user.

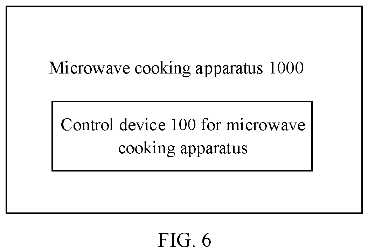

FIG. 6 is a structural block diagram of a microwave cooking apparatus according to an embodiment of the present disclosure.

As shown in FIG. 6, a microwave cooking apparatus 1000 includes the control device 100 for the microwave cooking apparatus as described in the above embodiments of the present disclosure.

The microwave cooking apparatus of the embodiment of the present disclosure employs the control device for the microwave cooking apparatus of the embodiment of the present disclosure, and the microwave cooking apparatus can realize both the power dividing and the power combining by the power divider to heat the food, thereby accelerating the cooking speed and improving the cooking experience of the user.

In the description of this specification, description with reference to the terms "one embodiment", "some embodiments", "example", "specific example", or "some examples" and the like in intended to mean that specific features, structures, materials or features described in connection with the embodiment or example are included in at least one embodiment or example of the present disclosure. In this specification, schematic representations of the above terms do not necessarily refer to the same embodiment or example. Furthermore, the described specific features, structures, materials or characteristics may be combined in any one or more embodiments or examples in any suitable manner.

In the description of this disclosure, it should be understood that the orientations or positional relationships indicated by the terms "center", "longitudinal", "lateral" "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are the orientations or positional relationships shown in the accompanying drawings, which are merely for the convenience of describing the present disclosure and simplifying the description, rather than indicating or implying that the indicated devices or elements must have a specific orientation, nor be constructed and operated in a specific orientation, and therefore should not be construed as a limitation to the present disclosure.

In addition, the terms "first" and "second" are only used for descriptive purposes, and should not be construed as indicating or implying relative importance or implying the number of indicated technical features. Thus, a feature defined with "first", "second" may expressly or implicitly include at least one of that features. In the description of the present disclosure, "a plurality of' means at least two, such as two, three, etc., unless expressly and specifically defined otherwise.

In the description of the present disclosure, unless otherwise clearly specified and defined, terms such as "installed", "mounted", "connected to", "connected with" and the like should be understood in a broad sense. For example, it may be a fixed connection or a detachable connection or integral connection; it may be a mechanical connection or an electrical connection; it may be a direct connection or an indirect connection by an intermediate; it may be an internal communication of two components or an interaction relationship between two components, unless otherwise clearly defined. For those of ordinary skill in the art, the specific meaning of the above-mentioned terms in the present disclosure can be understood according to specific circumstances.

In the present disclosure, unless expressly specified and defined otherwise, the first feature being "on" or "beneath" the second feature may indicate that the first feature is in direct contact with the second feature, or in indirectly contact with the second feature by an intermediate. Moreover, the first feature being "above" and "over" the second feature may indicate that the first feature is directly over or obliquely above the second feature, or simply indicate that a level of the first feature is higher than that of the second feature. The first feature being "under" or "below" the second feature may indicate that the first feature is directly under or obliquely below the second feature, or merely indicate that a level of the first feature is lower than that of the second feature.

Although the embodiments of the present disclosure have been described and illustrated above, it should be understood that the embodiments as described above is exemplary, and should not be construed as a limitation to the present disclosure. Various changes, modifications, alternatives and variants can be made by those of ordinary skill in the art within the scope of the present disclosure.

## Claims

1. A control device for a microwave cooking apparatus, wherein the microwave cooking apparatus comprises a cavity in which a microwave heating element is disposed, the control device comprising:
a microwave source;
a power divider configured to perform power dividing or power combining on a microwave output from the microwave source, wherein the power divider is connected to the microwave source at an input port thereof and to the microwave heating element at an output port thereof, or wherein the power divider is connected to the microwave heating element at the input port thereof and to the microwave source at the output port thereof;
a control circuit configured to control the microwave source to output the microwave based on a predetermined power, wherein the microwave output from the microwave source is transmitted to the microwave heating element through the power divider to heat a food in the cavity; and
a power supply configured to supply power to the control circuit and the microwave source.

2. The control device for the microwave cooking apparatus according to claim 1, wherein the power divider has M output ports, wherein M-1 microwave heating elements are provided, where M is an integer greater than 1, the control device further comprising:
a detection circuit having an input end connected to one of the M output ports and an output port connected to the control circuit, wherein the remaining M-1 output ports of the M output ports are connected to the M-1 microwave heating elements in one-to-one correspondence,
wherein the control circuit is further configured to calculate an output power of the microwave source based on a power signal detected by the detection circuit and to adjust the predetermined power based on the output power of the microwave source.

3. The control device for the microwave cooking apparatus according to claim 1 or 2,
wherein the microwave source is a solid-state microwave source, a magnetron, or a signal generator;
wherein when the microwave source is the signal generator, the control device further comprises an amplification circuit connected between the microwave source and the power divider or between the power divider and the microwave heating elements, the amplification circuit being configured to amplify a power input to the amplification circuit; and
wherein the power supply is further configured to supply power to the amplification circuit.

4. The control device for the microwave cooking apparatus according to claim 3, wherein when a plurality of amplification circuits is provided and connected between the power divider and the microwave heating element, the control circuit is further connected to each of the plurality of amplification circuits to control an operation state of each of the plurality of amplification circuits to heat a predetermined region in the cavity or perform a uniform heating.

5. The control device for the microwave cooking apparatus according to claim 1,
wherein when the power divider is connected to the microwave source at the input port thereof and to the microwave heating element at the output port thereof, one microwave source and one microwave heating element are provided, or one microwave source and a plurality of microwave heating elements are provided;
wherein when the power divider is connected to the microwave heating element at the input port thereof and to the microwave source at the output port thereof, a plurality of the microwave sources and one microwave heating element are provided.

6. The control device for the microwave cooking apparatus according to claim 1,
wherein the microwave cooking apparatus further comprises a wireless charging assembly, a microwave imaging assembly, and a lighting assembly,
wherein the power divider has N output ports of an equal-dividing type or an unequal-dividing type, where N is an integer greater than 3, wherein three of the N output ports are connected to the wireless charging assembly, the microwave imaging assembly, and the lighting assembly in one-to-one correspondence to realize wireless charging function, imaging of the food in the cavity, and illumination, respectively; and
wherein the control circuit is further connected to the microwave imaging assembly to adjust the output power of the microwave source based on an imaging condition of the food.

7. The control device for the microwave cooking apparatus according to claim 3, wherein the control circuit, the signal generator, the power divider and the amplification circuit are integrated together.

8. The control device for the microwave cooking apparatus according to claim 3, wherein when the control device comprises the detection circuit, the detection circuit, the control circuit, the signal generator, the power divider and the amplification circuit are integrated together.

9. The control device for the microwave cooking apparatus according to claim 1, wherein the microwave heating element is an antenna, a waveguide, or a cable.

10. A microwave cooking apparatus, comprising the control device for the microwave cooking apparatus according to any one of claims 1 to 9.
